# EUROPÄISCHE PATENTANMELDUNG

(11) **EP 4 529 761 A1**
(43) Veröffentlichungstag der Anmeldung: **02.04.2025**
(21) Anmeldenummer: 23200894.6
(22) Anmeldetag: 29.09.2023
(51) Int. Cl.: A01K 1/015

(54) **VERFAHREN ZUR HERSTELLUNG VON PELLETIERTER EINSTREU**

(71) Anmelder: Grillo Chemicals GmbH, 47169 Duisburg (DE)
(72) Erfinder: TEPPER, Daniel, 47169 Duisburg (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Herstellung von mit Natriumbisulfat angereicherter pelletierter Einstreu, das dadurch gekennzeichnet ist, dass man zerkleinertes Einstreumaterial mit Natriumbisulfat mischt und die diese Mischung in einer Matrize mit einem Pressverhältnis von 1:1,5 bis 1:5 presst.

## Beschreibung

Die vorliegende Erfindung betrifft ein Verfahren zur Herstellung von angereicherter pelletierter Einstreu, welche als Einstreumittel in der Tierhaltung, insbesondere der Geflügelhaltung, verwendet wird.

Das Thema Tierwohl ist Grundlage einer allgemeinen Diskussion in der Tierzucht. In der Nutztierhaltung werden Ställe mit einer Einstreu versehen. Diese wird vermehrt mit Additiven angereichert, um das Tierwohl zu fördern. Diese Additive sollen in der Lage sein, Schadstoffbildung zu verhindern oder zu verringern und damit das Stallklima zu verbessern.

In der DE 20 2023 104 062.4 wird eine pelletierte Einstreu offenbart, welche Natriumbisulfat als Additiv aufweist. Natriumbisulfat hat sich als vorteilhaft erwiesen, um insbesondere in der Geflügelhaltung Ammoniakemissionen zu verringern und Fußballen- und Sprunggelenksveränderungen der Tiere zu verringern.

Pellets aus Einstreu werden üblicherweise durch Pressen des Einstreumaterials hergestellt. Bei der Herstellung von pelletierter Einstreu, welche Natriumbisulfat als Additiv aufweisen, hat es sich jedoch gezeigt, dass diese mit üblichen Pressverfahren nicht herzustellen sind. Vielmehr kommt es auf Grund des anzuwendenden Drucks zu einer deutlichen Wärmeentwicklung und die Natriumbisulfat enthaltenden Pellets verkohlen während der Herstellung.

Es besteht daher Bedarf an einem Verfahren zur Herstellung von Pellets aus Einstreumaterial für die Tierhaltung, insbesondere der Geflügelhaltung, welches es ermöglicht Natriumbisulfat in die Pellets einzuarbeiten, ohne dass es während des Herstellungsvorgangs zu einer Zerstörung der Pellets kommt.

Überraschenderweise hat sich gezeigt, dass es durch optimierte Verfahrensführung möglich ist, mit Natriumbisulfat angereicherte pelletierte Einstreu herzustellen. Die der vorliegenden Erfindung zu Grunde liegende Aufgabe wird daher gelöst durch ein Verfahren zur Herstellung von mit Natriumbisulfat angereicherter pelletierter Einstreu, das dadurch gekennzeichnet ist, dass man zerkleinertes Einstreumaterial mit Natriumbisulfat mischt und diese Mischung in einer Matrize mit einem Pressverhältnis von 1:1,5 bis 1:5 presst.

Es hat sich gezeigt, dass es mit üblichen Matrizen nicht möglich ist, angereicherte pelletierte Einstreu herzustellen. Sobald eine Anreicherung mit Natriumbisulfat vorliegt, kommt es zu einer Verdichtung im Inneren der Matrizen. Hierdurch steigt die Temperatur im Inneren der Matrize an und es kommt zu einer Verkohlung der Pellets. Das mit Natriumbisulfat angereicherte Einstreumaterial lässt sich nicht mehr durch die Presskanäle/Matrize pressen und die Produktion kommt zum Stillstand.

Überraschenderweise hat sich gezeigt, dass bei einem Pressverhältnis von 1:1,5 bis 1:5, insbesondere von 1:2 bis 1:4, besonders bevorzugt von 1:2 bis 1:3 eine solche Verkohlung nicht erfolgt. Bei einem Pressverhältnis oberhalb 1:5, insbesondere oberhalb 1:4, entstehen verkohlte, schwarze Pellets. Beim Pressverhältnis oberhalb 1:3 sind die Pellets sehr hart. Besonders bevorzugt ist daher ein Pressverhältnis von weniger als 1:3.

Bei größeren Pressverhältnissen, also Pressverhältnissen oberhalb 1:5 und insbesondere 1:4 verstopft zudem die Anlage und damit die Matrize. Aufwändige Reinigungsschritte sind notwendig.

Bei einem Pressverhältnis unterhalb 1:1,5 bzw. unterhalb 1:2 entstehen keine ausreichend stabilen Pellets. Der Pressweg ist dann nicht mehr ausreichend, um das Material in geeigneter Art und Weise zu verdichten bzw. zu verpressen.

Der Pressweg ist erfindungsgemäß dabei das Verhältnis von Lochdurchmesser zu Länge der Presskanäle (Pressweg). Bei einem solchen Pressverhältnis hatte sich überraschenderweise gezeigt, dass mit Natriumbisulfat angereicherte pelletierte Einstreu in üblichen Pressen, wie eine Flachmatrizenpresse, hergestellt werden kann.

In einer bevorzugten Ausführungsform umfasst das erfindungsgemäße Verfahren die folgenden Schritte:
a) Bereitstellen das Einstreumaterials,
b) Zerkleinern des Einstreumaterials,
c) Bereitstellen des Natriumbisulfats,
d) Homogenes Vermischen des zerkleinerten Einstreumaterials und des Natriumbisulfats, und
e) Einbringen der erhaltenen Mischung in eine Presse mit einer Matrize mit einem Pressverhältnis von 1:1,5 bis 1:5.

Überraschenderweise hat sich gezeigt, dass ein solches Pressverhältnis besonders bevorzugt ist. Das Pressverhältnis beträgt insbesondere von 1:2 bis 1:4, besonders bevorzugt von 1:2,5 bis 1:3.

Als Einstreumaterial, welches zu Beginn bereitgestellt wird, können übliche Einstreumaterialien verwendet werden. Insbesondere ist das Einstreumaterial ausgewählt aus Stroh oder Häckselstroh, Weichholzspäne, Lignocellulose, Maissilage, Roggenstroh, Weizenstroh, Triticale, Dinkel, Dinkelspelzen, Sonnenblumenschalen, Heu und/oder Gras. Insbesondere wird nur eines der genannten Einstreumaterialien verwendet, um daraus mit Natriumbisulfat angereicherte pelletierte Einstreu herzustellen. Es ist erfindungsgemäß jedoch auch möglich, dass Mischungen aus 2, 3 oder mehr der genannten Materialien gemischt werden und so pelletierte Einstreu aus Mischungen an verschiedenen Einstreumaterialien erhalten werden.

Damit das Natriumbisulfat eine Wirkung zeigt, welche der Verbesserung des Tierwohls dient, beträgt der Anteil an Natriumbisulfat in der pelletierten Einstreu zumindest 5 Gewichtsprozent, bezogen auf das Gesamtgewicht der pelletierten Einstreu. Umfasst die pelletierte Einstreu zum Beispiel 100 g, so besteht dies zu 5 g aus Natriumbisulfat und zu 95 g aus dem Einstreumaterial. Besonders bevorzugt ist der Anteil an Natriumbisulfat in jedem Pellet gleich. Hierfür ist es insbesondere wichtig, dass das Vermischen des Einstreumaterials und des Natriumbisulfats in Schritt d) des erfindungsgemäßen Verfahrens besonders gründlich erfolgt. Überraschenderweise hat sich ebenfalls gezeigt, dass das Vermischen nicht räumlich unmittelbar über der Presse erfolgen soll, da dann ein homogenes Vermischen nicht möglich ist. Weiterhin soll das Vermischen nicht zu Beginn einer längeren Förderstrecke stehen, da während der Förderung beispielsweise in einer Schnecke eine Entmischung erfolgen kann. Es ist damit Bestandteil des fachmännischen Arbeitens, die genaue Position, an der das Vermischen zwischen zerkleinertem Einstreumaterial und Bisulfat sowie dem Einbringen in die Matrize der Presse erfolgt zu optimieren, dass eine homogene Mischung möglich ist, jedoch keine Entmischung erfolgt.

Besonders bevorzugt liegt der Anteil an Natriumbisulfat in der pelletierten Einstreu von 5 bis 55 Gewichtsprozent, vorzugsweise von 6 bis 45 Gewichtsprozent, insbesondere von 7 bis 30 Gewichtsprozent, bevorzugt von 8 bis 25 Gewichtsprozent und insbesondere bevorzugt von 10 bis 20 Gewichtsprozent, bezogen auf das Gesamtgewicht der pelletierten Einstreu. Es hat sich gezeigt, dass in diesen Bereichen eine effektive Wirkung erzielt wird und gleichzeitig eine stabile pelletierte Einstreu mit dem erfindungsgemäßen Verfahren erhalten wird.

Das Natriumbisulfat ist besonders bevorzugt, da es auch den AW-Wert der Einstreu beeinflusst. Der AW-Wert (activity of water Wert) gibt an, in welchem Maße Wasser durch ein Substrat, im vorliegenden Fall die angereicherte pelletierte Einstreu, gebunden ist. Die Zugabe eines hygroskopischen Materials wie Natriumbisulfat erhöht den Anteil an gebundenem Wasser in der Einstreue. Dies ist bei der Verwendung relevant, da sich dadurch der Anteil an freiem Wasser, der auf dem Stallboden vorhanden ist, verringert. Freies Wasser ist für zahlreiche mikrobielle Prozesse, wie beispielsweise Bakterienwachstum, erforderlich. Bei einem AW-Wert kleiner 0,85 wird mikrobielles Wachstum und beispielsweise auch Enzymaktivität zur Umwandlung von tierischen Ausscheidungsprodukten beispielsweise in gasförmigen Ammoniak deutlich reduziert. Es hat sich überraschenderweise gezeigt, dass Natriumbisulfat in dem bevorzugten Anteil dafür sorgt, dass der AW-Wert eines erfindungsgemäß hergestellten pelletierten Einstreumaterials ausreichend gering ist, um den Anteil an freiem Wasser zu reduzieren - was in Anbetracht eines hygroskopischen Materials als überraschend anzusehen ist.

Aufgrund der hygroskopischen Eigenschaften des Natriumbisulfats wird das erfindungsgemäß hergestellte pelletierte Einstreumaterial am Ende des Herstellungsprozesses verpackt. Die Verpackung erfolgt dabei insbesondere luftdicht, sodass keine Aufnahme von Luftfeuchtigkeit durch das pelletierte Einstreumaterial erfolgen kann.

Besonders bevorzugt beträgt der Durchmesser der hergestellten Pellets zwischen 3 und 10 mm, insbesondere von 4 bis 7 mm. Pellets mit einem solchen Durchmesser, der sich auch im Pressverhältnis wiederfindet, sind in der Tierzucht, insbesondere Geflügelzucht, besonders bevorzugt.

Die Länge der pelletierten Einstreu beträgt insbesondere von 1 cm bis 5 cm. Auch hier hat sich gezeigt, dass dies eine besonders effektiver Verwendung ermöglicht.

Das Mischungsverhältnis von Einstreumaterial und Natriumbisulfat muss angepasst werden, um ein gewünschtes Mischungsverhältnis zu erhalten. Dies kann insbesondere durch eine Anpassung der Fördermengen in einer Förderschnecke erfolgen. Es ist auch möglich, die gewünschte Mischung einzustellen und zu homogenisieren und dann unter Berücksichtigung der Länge der Zufuhrstrecke diese Mischung der Matrize zuführen.

Grundsätzlich wird vor dem Pressverfahren das Einstreumaterial derart zerkleinert, dass das Material mit dem erfindungsgemäßen Verfahren zu Pellets verarbeitet werden kann. Beispielsweise weist das Einstreumaterial, insbesondere das Stroh, einen D50-Wert von 1500 µm bis 4000 µm auf.

Nach dem Einbringen der homogenen Mischung in die Matrize der Presse wird ein Druck angelegt. Dieser sollte 150 bar nicht übersteigen. Bei einem höheren Druck können die Pellets nicht stabil erhalten werden. Ein Druck von 100 bar ist nicht zu unterschreiten, da sonst das zu verpressende Material nicht durch die Matrize gepresst werden kann und die Matrize verstopft und die Anlage zum Stillstand kommt.

Nach der Herstellung der Pellets können diese, wenn dies gewünscht ist, durch geeignete Techniken, z. B. einen Granulierstuhl zu einem Granulat beziehungweise feineren Einstreumaterial nachbearbeitet werden. Dies dient der Anpassung der Einstreubeschaffenheit, um somit beim Einsatz im Stall die Bodenfläche bei gleicher Einsatzmenge besser bedecken zu können, soweit dies gewünscht ist.

Das Einstreumaterial weist vor dem Pressvorgang einen gewissen Anteil an Wasser auf. Hierbei handelt es sich um ein inhärentes Merkmal des Materials an sich. Es ist auch möglich, dass Wasser zu dem Einstreumaterial zugegeben wird, um eine bessere Verarbeitung zu ermöglichen. Nach dem Pressen in der Matrize beträgt der Wasseranteil der pelletierten Einstreu bevorzugt jedoch 15 Gewichtsprozent oder weniger, insbesondere von 10 Gewichtsprozent oder weniger, besonders bevorzugt 5 Gewichtsprozent oder mehr. Auch hier ist der Anteil an Gewichtsprozent bezogen auf das Gesamtgewicht der pelletierten Einstreu. Der Wasseranteil sorgt dafür, dass stabile Pellets erhalten werden.

Besonders bevorzugt werden die pelletierte Einstreu im Anschluss an das Pressen getrocknet. Dies kann insbesondere durch Luft erfolgen. Besonders bevorzugt beträgt die Temperatur der Luft 70 bis 80 °C. Die Trocknung erfolgt über eine Dauer von beispielsweise 20 bis 30 Minuten oder länger. So erhalten die pelletierte Einstreue eine besondere Festigkeit, sodass diese lagerstabil verpackt und ohne Probleme transportiert werden können.

Am Ende des Herstellungsprozess wird die pelletierte Einstreu verpackt, um dann verkauft werden zu können. Die Verpackung ist aber insbesondere derart ausgestaltet, dass keine Feuchtigkeit aus der Luft an die pelletierte Einstreu gelangt. So kann eine pelletierte Einstreu erhalten werden, die lagerstabil ist, in ihrer Form erhalten bleibt und auch nach Transport nur einen geringen Anteil an Feinmaterial aufweist, sodass die pelletierte Einstreu in hoher Qualität auch nach Transport und Lagerung vorliegt.

## Patentansprüche

1. Verfahren zur Herstellung von mit Natriumbisulfat angereicherter pelletierter Einstreu, **dadurch gekennzeichnet, dass** man zerkleinertes Einstreumaterial mit Natriumbisulfat mischt und die diese Mischung in einer Matrize mit einem Pressverhältnis von 1:1,5 bis 1:5 presst.

2. Verfahren nach Anspruch 1, **dadurch gekennzeichnet, dass** es die folgenden Schritte umfasst:
a) Bereitstellen des Einstreumaterials,
b) Zerkleinern des Einstreumaterials,
c) Bereitstellen des Natriumbisulfats,
d) homogenes Vermischen des zerkleinerten Einstreumaterials und des Natriumbisulfats, und
e) einbringen der erhaltenen Mischung in eine Presse mit einer Matrize mit einem Pressverhältnis von 1:1,5 bis 1:5.

3. Verfahren nach Anspruch 1 oder 2, **dadurch gekennzeichnet, dass** die Matrize ein Pressverhältnis von 1:2 bis 1:4, bevorzugt von 1:2,5 bis 1:3 aufweist.

4. Verfahren nach zumindest einem der Ansprüche 1 bis 3, **dadurch gekennzeichnet, dass** das Einstreumaterial ausgewählt ist aus Stroh oder Häckselstroh, Weichholzspäne, Lignocellulose, Maissilage, Roggenstroh, Weizenstroh, Tritikale, Dinkel, Dinkelspelzen, Sonnenblumenschalen, Heu und/oder Gras oder insbesondere aus einem der genannten Materialien besteht.

5. Verfahren nach zumindest einem der Ansprüche 1 bis 4, **dadurch gekennzeichnet, dass** der Anteil an Natriumbisulfat in der pelletierten Einstreu zumindest 5 Gew.-% beträgt, bezogen auf das Gesamtgewicht der pelletierten Einstreu.

6. Verfahren nach Anspruch 5, **dadurch gekennzeichnet, dass** der Anteil an Natriumbisulfat von 5 bis 55 Gew.-%, vorzugsweise von 6 bis 45 Gew.-%, insbesondere von 7 bis 30 Gew.-%, bevorzugt von 8 bis 25 Gew.-%und insbesondere bevorzugt von 10 bis 20 Gew.-%beträgt, bezogen auf das Gesamtgewicht der pelletierten Einstreu.

7. Verfahren nach zumindest einem der Ansprüche 1 bis 6, **dadurch gekennzeichnet, dass** der Durchmesser der hergestellten pelletierten Einstreu zwischen 3 und 10 mm, bevorzugt von 4 bis 7 mm beträgt.

8. Verfahren nach zumindest einem der Ansprüche 1 bis 7, **dadurch gekennzeichnet, dass** die Länge der hergestellten pelletierten Einstreu von 1 cm bis 5 cm beträgt.

9. Verfahren nach zumindest einem der Ansprüche 1 bis 8, **dadurch gekennzeichnet, dass** das Mischungsverhältnis von Einstreumaterial und Natriumbisulfat durch Fördermengen in einer Förderschnecke angepasst wird.

10. Verfahren nach zumindest einem der Ansprüche 1 bis 9, **dadurch gekennzeichnet, dass** die Vermischung in Schritt d) nicht unmittelbar über der Presse erfolgt.

11. Verfahren nach zumindest einem der Ansprüche 1 bis 10, **dadurch gekennzeichnet, dass** bei einem Druck von bis zu 150 bar gepresst wird.

12. Verfahren nach zumindest einem der Ansprüche 1 bis 11, **dadurch gekennzeichnet, dass** der pelletierte Einstreu einen Wasseranteil von 15 Gew.-% oder weniger, insbesondere 10 Gew.-% oder weniger, besonders bevorzugt 5 Gew.-% oder mehr, bezogen auf das Gesamtgewicht der pelletierten Einstreu, aufweisen.

13. Verfahren nach zumindest einem der Ansprüche 1 bis 11, **dadurch gekennzeichnet, dass** die pelletierte Einstreu abschließend getrocknet wird.

14. Pelletiertes Einstreu erhalten nach einem Verfahren gemäß zumindest einem der Ansprüche 1 bis 13.

15. Granulat erhalten durch Nachbearbeitung einer Einstreu gemäß Anspruch 14, insbesondere durch Nachbearbeitung mit einem Granulierstuhl.
